(19) Europäisches Patentamt
European Patent Office
Office européen des brevets

(11) Veröffentlichungsnummer: **0 460 556 B1**

(12) # EUROPÄISCHE PATENTSCHRIFT

(45) Veröffentlichungstag der Patentschrift: **12.04.95**

(51) Int. Cl.[6]: **C08G 77/60**

(21) Anmeldenummer: **91108979.5**

(22) Anmeldetag: **01.06.91**

(54) **Polycarbosilane und Verfahren zu deren Herstellung.**

(30) Priorität: **08.06.90 DE 4018374**

(43) Veröffentlichungstag der Anmeldung:
**11.12.91 Patentblatt 91/50**

(45) Bekanntmachung des Hinweises auf die Patenterteilung:
**12.04.95 Patentblatt 95/15**

(84) Benannte Vertragsstaaten:
**AT BE CH DE DK ES FR GB GR IT LI NL SE**

(56) Entgegenhaltungen:
**EP-A- 0 400 465**
**US-A- 4 761 458**
**US-A- 4 777 234**

**DATABASE CHEMICAL ABSTRACTS (HOST: STN) Band 88, Nr. 20, 26 Dezember 1988,Zusammenfassung Nr. 137320r, Columbus, Ohio,US; A. V. PODOL'SKII ET AL: 'Synthesis and copolymerization of reactive polycarbosilanes'**

**DATABASE CHEMICAL ABSTRACTS (HOST: STN) Band 81, Nr. 12, 23 September 1974,Zusammenfassung Nr. 64265v, Columbus, Ohio,US; A. V. PODOL'SKII ET AL:'Poly(carbosilanes)'**

**DATABASE CHEMICAL ABSTRACTS (HOST: STN) Band 110, Nr. 25, 19 Juni 1989,Zusammenfassung Nr. 231692h, Columbus, Ohio,US; E. BACOUE ET AL: 'New modelcarbosilanes. 3. Synthesis andcharacterization of linear functionalcarbosilanes'**

(73) Patentinhaber: **Kali-Chemie Aktiengesellschaft**
**Hans-Böckler-Allee 20**
**D-30173 Hannover (DE)**

(72) Erfinder: **Sartori, Peter**
**von-Büllingen-Strasse 62**
**W-4134 Rheinberg 4 (DE)**
Erfinder: **Habel, Wolfgang**
**Reichswaldallee 17**
**W-4000 Düsseldorf 30 (DE)**
Erfinder: **Judenau, Heinz-Peter**
**Latumer-Bruchweg 101**
**W-4150 Krefeld 12 (DE)**

(74) Vertreter: **Lauer, Dieter, Dr.**
**c/o Solvay Deutschland GmbH**
**Hans-Böckler-Allee 20**
**D-30173 Hannover (DE)**

**EP 0 460 556 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf neue Polycarbosilane und Verfahren zu deren Herstellung.

Polycarbosilane sind Polymere mit einer Gerüststruktur aus den Elementen Kohlenstoff und Silicium, in denen im allgemeinen Si-Gruppen und Kohlenwasserstoffgruppen alternierend vorliegen. Die Gerüststruktur solcher Polycarbosilane besteht z.B. aus wiederkehrenden Struktureinheiten der Formel

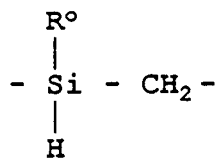

worin R° z.B. einen Kohlenwasserstoff-Substituenten darstellt. Nach bekannten Herstellverfahren werden solche Polycarbosilane gewonnen, indem man Monosilane wie z.B. Tetramethylsilan, Trimethylchlorsilan, Dimethyldichlorsilan oder Methyltrichlorsilan durch thermische Zersetzung in Gemische verschiedener Polycarbosilane überführt. Ein anderes bekanntes Verfahren zur Herstellung solcher Polycarbosilane geht von Polysilanen aus, in denen mindestens einer der beiden Substituenten am Siliciumatom eine Methylgruppe ist. Diese Polysilane werden pyrolytisch bei Temperaturen von 350 bis 450 °C in das Polycarbosilan überführt, wobei aus einem Teil der Methylsubstituenten während der thermischen Umwandlung Methylengruppen gebildet werden, die jeweils zwischen benachbarte Si-Atome des Polysilans eingeschoben werden, und wobei ein Wasserstoffatom am Siliciumatom verbleibt. Solche Pyrolysen verlaufen radikalisch.

Aus der DE-A-36 34 281 sind Polycarbosilane bekannt, bei denen die Si-Atome durch Brücken aus organischen aromatischen oder vorzugsweise heteroaromatischen Resten wie Pyrrol-2,5-diyl oder Thiophen-2,5-diyl verbunden sind. Ziel ist hierbei, nach zusätzlicher chemischer oder elektrochemischer Dotierung leitfähige Polysilane herzustellen. Aus der britischen Patentschrift GB-B-896 301 ist es bekannt, monomere Diaryldihalogensilane und p-Phenylendimagnesiumbromid in einer Grignard-Reaktion in Polycarbosilane zu überführen, bei denen die Si-Atome durch Phenylenbrücken verbunden sind. Es werden thermoplastische, hitzehärtbare Harze erhalten.

Nach Schilling und Williams (Schilling, C.L.,Jr.; Williams, T.C. (Union Carbide Corp., Tarrytown, NY USA). Report 1983, TR-83-2; Order No. AD-A141558, 15 pp. (Eng). Avail. NTIS. From Gov. Rep. Announce. Index (U.S.) 1984, 84(18), 48; siehe auch Chemical Abstracts 101: 196821q) ist es bekannt, Copolymere aus Silanmonomereinheiten und Olefineinheiten in Gegenwart von Kalium in Tetrahydrofuran herzustellen. Als Silanmonomere werden Methyltrichlorsilan, Dimethyldichlorsilan oder Methyldichlorhydrosilan mit Styrol oder Isopren umgesetzt, wobei im Falle von Styrol die Si-Einheiten durch phenylsubstituierte Ethyleneinheiten verknüpft sind. Im Falle von Isopren sind die Si-Einheiten durch die entsprechende methylsubstituierte C4-Alkylenkette, welche noch eine Doppelbindung aufweist, verknüpft. In zwei weiteren Beispielen wird Isopren mit Methylchlormethyldichlorsilan bzw. mit einem Gemisch aus Vinylmethyldichlorsilan und Trimethylchlorsilan umgesetzt.

Aus der US 4 761 458 sind halogenierte Polycarbosilane bekannt. Zur Herstellung dieser halogenierten Polycarbosilane werden solche Polycarbosilane, die wenigstens 0,1 Gew.-% SiH-Gruppen tragen, durch Umsetzung mit Chlorierungs- oder Bromierungsreagentien in einer radikalischen Reaktion in chlorierte oder bromierte Polycarbosilane überführt. Aus den SiH-Gruppen werden hierbei SiCl- oder SiBr-Gruppen gebildet. Die US 4 761 458 setzt als Eddukte für die Halogenierungsreaktion gewöhnliche, im Stand der Technik bekannte, mit niedrigen Alkylgruppen substituierte Polycarbosilane der oben beschriebenen Art ein. Diese wurden durch Pyrolyse hergestellt, z.B. von Polydimethylsilan $(-(CH_3)_2Si-)_n$.

Aus der deutschen Offenlegungsschrift DE-A-36 16 378 sind ferner Vorpolymere aus keramikbildenden Elementen für die Herstellung von keramischen polymeren Werkstoffen bekannt, in denen leicht abspaltbare Elemente zum Teil durch schwer abspaltbare Elemente wie Fluor oder vollfluorierte Kohlenwasserstoffverbindungen ersetzt wurden. Als leicht abspaltbares Element wird dort Wasserstoff genannt. Das Ausführungsbeispiel der Offenlegungsschrift geht ebenfalls von einem gewöhnlichen, im Stand der Technik bekannten Polycarbosilan der oben beschriebenen Art aus, welches durch Pyrolyse von Polydimethylsilan $(-(CH_3)_2Si-)_n$ hergestellt wurde. Die Einführung von Fluor in dieses Polycarbosilan wird durch Elektrofluorierung mit Tetraethylammoniumfluorid oder durch Direktfluorierung (radikalisch) mit elementarem Fluor bewirkt. Hierbei kommt es neben der Umwandlung von SiH-Gruppen in SiF-Gruppen auch zur Einführung

von Fluoratomen in die Methylsubstituenten der Siliciumatome und in die Methylenbrücken des Si-$CH_2$-Si-Gerüstes des Polycarbosilans.

Zwar sind im Stand der Technik bereits eine Vielzahl von Polycarbosilanen und auch einige halogenierte Polycarbosilane, sowie Verfahren zu deren Herstellung bekannt, doch konnten bisher bestimmte Polycarbosilantypen im Stand der Technik nicht hergestellt werden. So war es bisher nicht möglich, Polycarbosilane herzustellen, deren Si-Atome durch definierte aliphatische, teilweise oder ganz mit Fluor substituierte Kohlenwasserstoffbrücken verbunden sind. Ebenso war es bisher nicht möglich, Polycarbosilane mit definierter Struktur herzustellen, die Fluorsubstituenten an den Si-Atomen und in den die Si-Atome verbindenden, aliphatischen Kohlenwasserstoffbrücken tragen.

Ferner weisen die im Stand der Technik bekannten, insbesondere pyrolytisch gewonnenen Polycarbosilane und daraus durch radikalische Halogenierungsmethoden hergestellte halogenierte Polycarbosilane hinsichtlich der Produkteigenschaften und der Herstellverfahren eine Reihe von Nachteilen auf. Die nachteiligen Eigenschaften dieser bekannten Polycarbosilane sind auf die ungünstigen Auswirkungen ihrer pyrolytischen Herstellung zurückzuführen, durch die im wesentlichen bereits die Grundstruktur und der maximal erreichbare Reinheitsgrad der Polycarbosilane und auch der hergestellten halogenierten Produkte vorbestimmt wird. So sind die bekannten halogenierten und nicht-halogenierten Polycarbosilane uneinheitliche Produkte mit unregelmäßigem SiC-Gerüst, die durch mehr oder weniger leicht flüchtige, durch die Herstellung bedingte Zersetzungsprodukte begleitet werden. Zusätzliche Maßnahmen zur Einengung auf ein für die beabsichtigte weitere Verwendung günstigeres Produktspektrum (z.B. Reinigung und/oder Trennung durch fraktionierte Kristallisation bzw. fraktionierte Destillation) sind aber arbeits-, energie- und kostenaufwendig. Die Einführbarkeit von Halogenatomen in Polycarbosilane des Standes der Technik hängt darüber hinaus unmittelbar von den in diesen Polycarbosilanen vorhandenen SiH-Gruppen ab, da nur diese SiH-Gruppen mit den bekannten Verfahren zur Herstellung halogenierter Polycarbosilane in SiHal-Gruppen (Hal = Halogen) überführt werden können. Die Bildung von SiH-Gruppen bei der pyrolytischen Herstellung von Polycarbosilanen läßt sich jedoch nur schlecht steuern, was sich unmittelbar auch auf die Eigenschaften von daraus hergestellten halogenierten Polycarbosilanen auswirkt. Ferner ist auch bei der Herstellung von bekannten halogenierten Polycarbosilanen, die unter radikalischen Halogenierungsbedingungen durchgeführt wird, der Halogenierungsgrad und -ort schwer steuerbar. Zwar reagieren zunächst die SiH-Gruppen bevorzugt zu SiHal-Gruppen, doch kommt es in erheblichem Umfange zu Nebenreaktionen, insbesondere bei langen Reaktionszeiten und unter leicht verschärften Reaktionsbedingungen. So treten neben der gewollten Halogenierung in den SiH-Gruppen auch unspezifische Halogenierungsreaktionen in den Kohlenwasserstoffsubstituenten an Siliciumatomen oder in den Methylenbrücken des eingesetzten Polycarbosilans auf. Die radikalischen Reaktionsbedingungen können darüber hinaus zu Spaltungsreaktionen im Si-C-Si-Gerüst des Polycarbosilans führen, wodurch das eingesetzte Polycarbosilan und/oder das halogenierte Polycarbosilan während der Umsetzung teilweise in unerwünschte Bruchstücke und flüchtige, niedermolekulare Verbindungen abgebaut werden können.

Es bestand daher die Aufgabe, unter Vermeidung der Nachteile des Standes der Technik neue, bisher im Stand der Technik nicht zugängliche, halogenierte Polycarbosilane mit günstigen Eigenschaften zur Verfügung zu stellen, die sich leicht an den jeweiligen Verwendungszweck optimal anpassen lassen. Eine weitere Aufgabe bestand in der Bereitstellung einfacher und gut steuerbarer Verfahren zur Herstellung dieser neuen halogenierten Polycarbosilane.

Die Aufgaben werden gelöst durch die erfindungsgemäßen halogenierten Polycarbosilane und die erfindungsgemäßen Verfahren zur Herstellung dieser Polycarbosilane.

Die Erfindung betrifft Polycarbosilane auf Basis von Struktureinheiten der allgemeinen Formel I

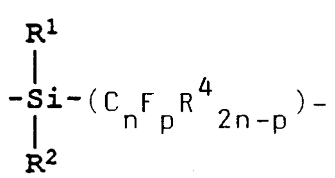

(I)

worin

- $R^1$ für Wasserstoff, Alkyl, Cycloalkyl, Aryl, Arylalkyl oder Halogen steht, wobei $R^1$ in verschiedenen Einheiten ein und desselben Polycarbosilans auch unterschiedliche Bedeutung besitzen kann,
- $R^2$ für Alkyl, Cycloalkyl, Aryl, Arylalkyl oder Halogen steht, wobei $R^2$ in verschiedenen Einheiten ein und desselben Polycarbosilans auch unterschiedliche Bedeutung besitzen kann,

$R^4$ für Wasserstoff, Fluor oder Phenyl steht, wobei $R^4$ in verschiedenen Einheiten ein und desselben Polycarbosilans auch unterschiedliche Bedeutung besitzen kann,

n für den Fall, daß $R^4$ für Phenyl steht, die Zahl 1 bedeutet und für den Fall, daß $R^4$ für Wasserstoff oder Fluor steht, eine ganze Zahl von 1 bis 6 bedeutet, wobei n in verschiedenen Einheiten ein und desselben Polycarbosilans auch unterschiedliche Bedeutung besitzen kann, und

p für eine ganze Zahl von n bis 2n-1 steht, wobei p in verschiedenen Einheiten ein und desselben Polycarbosilans auch unterschiedliche Bedeutung besitzen kann.

In einer Ausgestaltung der Erfindung bestehen die Polycarbosilane aus einer Anzahl verschiedener, nebeneinander vorliegender Struktureinheiten der allgemeinen Formeln I. Diese Struktureinheiten können sich in den Resten $R^1$, $R^2$, und/oder $R^4$, sowie in den Indices n und/oder p unterscheiden. Gewöhnlich stellen die das Polycarbosilan aufbauenden Struktureinheiten der allgemeinen Formeln I Kombinationen von nicht mehr als maximal drei unterschiedlich substituierten $R^1R^2Si$-Einheiten und von nicht mehr als maximal drei unterschiedlichen $(C_nF_pR^4{}_{2n-p})$-Einheiten dar.

In einer zweckmäßigen Variante besitzt der Brückensubstituent $R^4$, sowie die Indices n und p in allen Struktureinheiten der allgemeinen Formel I des Polycarbosilans jeweils nur eine einzige Bedeutung. Es liegen dann z.B. solche Polycarbosilane vor, in denen die Struktureinheiten der allgemeinen Formeln I aus Kombinationen von nicht mehr als drei unterschiedlich substituierten R1R2Si-Einheiten und lediglich einer $(C_nF_pR^4{}_{2n-p})$-Einheit aufgebaut sind.

In einer weiteren zweckmäßigen Variante besitzt jeder der Si-Substituenten $R^1$ und $R^2$ in allen Struktureinheiten der allgemeinen Formeln I des Polycarbosilans jeweils nur eine einzige Bedeutung. Es liegen dann z.B. Polycarbosilane aus Strukturelementen der allgmeinen Formel I vor, in denen alle $R^1R^2Si$-Einheiten identisch sind.

In einer bevorzugten Variante liegt in den erfindungsgemäßen Polycarbosilanen nur ein einziger Typ von Struktureinheiten der allgemeinen Formeln I vor. Die $R^1R^2Si$-Einheiten und die $(C_nF_pR^4{}_{2n-p})$-Einheiten sind dann in allen Struktureinheiten des Polycarbosilans auf Basis der allgemeinen Formel I identisch.

In den erfindungsgemäßen Polycarbosilanen auf Basis der Struktureinheiten der Formel I kann $R^1$ Wasserstoff sein. $R^2$ steht dann für gesättigtes oder ungesättigtes Alkyl, Cycloalkyl, Aryl, Arylalkyl oder Halogen.

In den erfindungsgemäßen Polycarbosilanen auf Basis von Struktureinheiten der Formel I können die Reste $R^1$ und/oder $R^2$ für Alkyl stehen; Alkyl besitzt hierbei die Bedeutung eines gesättigten oder ungesättigten, geradkettigen oder verzweigten Alkylrestes, der gegebenenfalls durch inerte Reste weiter substituiert sein kann. Beispiele für geeignete Alkylreste sind C1- bis C16-Alkylreste, wie z.B. Methyl, Ethyl, Propyl, Butyl, Pentyl, Hexyl, Octyl, Dodecyl, Hexadecyl, Isopropyl, Isobutyl, Tertiärbutyl, Vinyl oder Allyl, insbesondere aber C1- bis C6-Alkylreste. Bevorzugt sind niedrige Alkylreste mit 1 bis 4 C-Atomen, insbesondere Methyl, Ethyl, Propyl, Butyl und Vinyl.

In den erfindungsgemäßen Polycarbosilanen auf Basis von Struktureinheiten der Formel I können die Reste $R^1$ und/oder $R^2$ für Cycloalkyl stehen; Cycloalkyl steht hierbei mit der Bedeutung eines gesättigten oder ungesättigten, gegebenenfalls durch inerte Reste weiter substituierten Cycloalkylrestes. Beispiele für Cycloalkyl sind Cyclopentyl, Cyclohexyl, Cyclopentenyl oder Cyclohexenyl.

In den erfindungsgemäßen Polycarbosilanen auf Basis von Struktureinheiten der Formel I können die Reste $R^1$ und/oder $R^2$ für Aryl stehen; Aryl steht hierbei mit der Bedeutung eines unsubstituierten oder inert substituierten aromatischen Kohlenwasserstoffrestes. Beispiele für Aryl sind Phenyl, Naphthyl, p-Diphenyl oder Alkylarylreste wie Tolyl, Ethylphenyl oder Propylphenyl. Bevorzugt ist Phenyl.

In den erfindungsgemäßen Polycarbosilanen auf Basis von Struktureinheiten der Formel I können die Reste $R^1$ und/oder $R^2$ für Arylalkyl stehen; Beispiele für Arylalkylgruppen sind Phenylmethyl oder Phenylethyl.

In den erfindungsgemäßen Polycarbosilanen auf Basis von Struktureinheiten der Formel I können die Reste $R^1$ und/oder $R^2$ für Halogen stehen; Halogen steht hierbei insbesondere mit der Bedeutung Chlor, Brom oder Fluor.

In einer Untervariante der erfindungsgemäßen Polycarbosilane zeichnen sich diese dadurch aus, daß in den Struktureinheiten der Formel I die Reste $R^1$, $R^2$ und $R^4$, sowie der Index p die obige Bedeutung besitzen und n = 1 ist. In einer zweckmäßigen Ausgestaltung dieser Variante ist der Rest $R^4$ Wasserstoff oder Phenyl; Beispiele für solche phenylsubstituierten Methylenbücken sind Phenylfluormethylen (-CFPh-). Die Reste $R^1$ und/oder $R^2$ in den Si-Einheiten können in dieser Erfindungsvariante die oben angegebenen Bedeutungen besitzen, insbesondere Wasserstoff, niedrieges Alkyl mit 1 bis 4 C-Atomen, auch ungesättigtes niedriges Alkyl wie z.B. Vinyl, Phenyl oder Halogen bedeuten.

In einer anderen, bevorzugten Untervariante der erfindungsgemäßen Polycarbosilane zeichnen sich diese dadurch aus, daß in den Struktureinheiten der Formel I der Rest $R^4$ für Wasserstoff oder Fluor, oder

vorzugsweise für Fluor, stehen und die anderen Reste $R^1$ und $R^2$ und die Indices n und p die obige Bedeutung besitzen. Es liegen dann erfindungsgemäße Polycarbosilane vor, in denen die $R^1R^2$Si-Einheiten durch partiell fluorierte oder perfluorierte Kohlenwasserstoffbrücken mit 1 bis 6 Kohlenstoffatomen verknüpft sind. In einer bevorzugten Gruppe dieser Polycarbosilane sind die $R^1R^2$Si-Einheiten des Polycarbosilans durch partiell oder vollständig fluorierte Kohlenwasserstoffbrücken mit 1 bis 3 Kohlenstoffatomen verknüpft, d.h. es liegen Polycarbosilane auf Basis der Struktureinheiten der Formel I vor, in der n eine ganze Zahl von 1 bis 3 bedeutet und die Reste $R^1$, $R^2$, und $R^4$ und der Index p die vorstehende Bedeutung besitzen. Bevorzugte Kohlenwasserstoffbrücken dieser Untervariante der erfindungsgemäßen Polycarbosilane sind die perfluorierten Kohlenwasserstoffbrücken mit $R^4$ in der Bedeutung Fluor. Beispiele für partiell oder vollständig fluorierten Kohlenwasserstoffbrücken sind Brücken der allgemeinen Formel (-$C_nF_pH_{2n-p}$-) oder (-$CF_2$-)n, z.B. Monofluormethylen, Difluormethylen, Difluorethylen, Trifluorethylen, Tetrafluorethylen, Trifluorpropylen, Tetrafluorpropylen, Pentafluorpropylen, Hexafluorpropylen etc., bis einschließlich Dodekafluorhexylen.

Die Reste $R^1$ und/oder $R^2$ können in den Polycarbosilanen mit partiell fluorierten oder perfluorierten Kohlenwasserstoffbrücken die weiter oben angegebenen Bedeutungen besitzen. In einer bevorzugten Ausgestaltung der Untervariante der erfindungsgemäßen Polycarbosilane mit partiell oder vollständig fluorierten Kohlenwasserstoffbrücken zeichnen sich diese jedoch dadurch aus, daß in den Struktureinheiten der Formel I der Rest $R^1$ für Wasserstoff, niederes, ggf. auch ungesättigtes niederes Alkyl, Phenyl oder Halogen steht und der Rest $R^2$ für niederes ggf. auch ungesättigtes niederes Alkyl, Phenyl oder Halogen steht. Niederes Alkyl bedeutet hierbei Alkylreste mit 1 bis 4 C-Atomen, insbesondere Methyl, Ethyl, Propyl, Butyl oder Vinyl. In dieser Ausgestaltung der Erfindung liegen dann z.B. Polycarbosilane mit partiell oder vollständig fluorierten Kohlenwasserstoffbrücken vor, die als $R^1R^2$Si-Einheiten Dimethylsilylen-, Diethylsilylen- etc., Methylethylsilylen-, Methylvinylsilylen, Ethylvinylsilylen- etc., Diphenylsilylen-, Methylphenylsilylen-, Ethylphenylsilylen- etc. Methylhalogensilylen, Ethylhalogensilylen- etc., Phenylhalogensilylen- oder Dihalogensilylen-Einheiten enthalten.

In einer bevorzugten Ausgestaltung der erfindungsgemäßen Polycarbosilane mit partiell oder vollständig fluorierten Kohlenwasserstoffbrücken zeichnen sich diese dadurch aus, daß in den Struktureinheiten der Formel I der Rest $R^2$ für Halogen, vorzugsweise für Chlor, Brom oder Fluor steht, wobei $R^1$ die vorstehend angegebene Bedeutung Wasserstoff, niederes, auch ungesättigtes niederes Alkyl, Phenyl oder Halogen besitzt und $R^4$ und die Indices n und p die oben für die Variante von Polycarbosilanen mit partiell bzw. vollständig fluorierten Kohlenwasserstoffbrücken angegebenen Bedeutungen besitzen. Es liegen dann Si-halogenierte, auch gemischt Si-halogenierte, Polycarbosilane mit partiell bzw. vollständig fluorierten Kohlenwasserstoffbrücken vor, die in den $R^1R^2$Si-Einheiten gleiche oder verschiedene Halogenatome tragen. Beispiele für solche Halogensilylen-Einheiten sind Methylchlorsilylen, Methylbromsilylen, Methylfluorsilylen, Ethylchlorsilylen, Ethylbromsilylen, Ethylfluorsilylen etc., Phenylchlorsilylen, Phenylbromsilylen, Phenylfluorsilylen und auch Dihalogensilylen, z.B. Difluorsilylen.

In bevorzugten, auch in den Si-Einheiten halogenierten Polycarbosilanen der Variante mit partiell bzw. vollständig fluorierten Kohlenwasserstoffbrücken ist das Halogenatom in der Si-Einheit Brom oder Fluor, insbesondere aber Fluor. Bevorzugte Beispiele für diese halogenierten Polycarbosilane sind z.B. aus Methylbromsilylen-Einheiten und Tetrafluorethylen-Einheiten oder aus Mehylfluorsilylen-Einheiten und Tetrafluorethylen-Einheiten aufgebaut.

Die Erfindung umfaßt hierbei auch gemischt halogenierte Polycarbosilane, das heißt solche Polycarbosilane, in denen insbesondere die Halogenatome Chlor, Brom und/oder Fluor nebeneinander vorliegen können.

In einer weiteren Variante der Erfindung können die Polycarbosilane durch Verzweigungsgruppen der allgemeinen Formeln II und/oder III

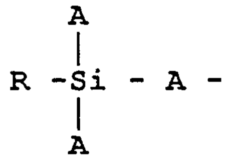 (II),

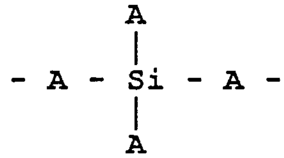 (III)

worin

A für einen Rest $C_nF_pR^4{}_{2n-p}$ steht, worin $R^4$ und die Indices n und p die obige Bedeutung besitzen und

R für Wasserstoff oder Alkyl, Cycloalkyl, Aryl oder Arylalkyl mit den oben angegebenen Bedeutungen steht,

vernetzt sein können. Die erfindungsgemäßen Polybarbosilane können durch Anteile von bis zu 50 % der Verzweigungsgruppen II und/oder III vernetzt sein.

Die erfindungsgemäßen Polycarbosilane auf Basis der allgemeinen Struktureinheiten der Formel I können verschiedene Endgruppen aufweisen. Die Endgruppen können Halogen-, Alkyl-, Cycloalkyl-, Arylalkyl-, Aryl-, Alkoxyl- oder Hydroxylgruppen sein. Beispiele für Endgruppen sind Chlor, Brom, Fluor, Methyl, Phenyl, Methoxyl oder Hydroxyl.

Die erfindungsgemäßen Polycarbosilane sind feste, flüssige, wachsartige oder viskose Materialien mit einer Struktur, in welcher im wesentlichen jedes Silicium-Atom nur an Kohlenstoffatome gebunden ist. Diese Polycarbosilane zeichnen sich dadurch aus, daß sie einen Si-Si-Bindungsanteil von nur maximal 5 % besitzen. In den erfindungsgemäßen Beispielen liegt der Si-Si-Bindungsanteil sogar unter 1 %.

Die Anzahl der Struktureinheiten, die die erfindungsgemäßen Polycarbosilane aufbauen, liegt im allgemeinen bei Werten zwischen 10 und 500, vorzugsweise zwischen 30 und 150. Die Polycarbosilane weisen damit mittlere Molekulargewichte im Bereich von 600 bis 300 000 g/mol auf, vorzugsweise im Bereich 700 bis 30 000 g/mol.

Die Erfindung betrifft auch ein Verfahren zur Herstellung von Polycarbosilanen auf Basis von Struktureinheiten der Formel I, wonach man

a) zur Herstellung von Polycarbosilanen auf Basis von Struktureinheiten der allgemeinen Formel Ia

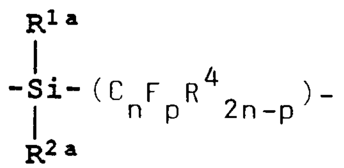

(Ia)

worin

- $R^{1a}$ für Wasserstoff, Alkyl, Cycloalkyl, Aryl oder Arylalkyl steht, wobei $R^{1a}$ in verschiedenen Einheiten ein und desselben Polycarbosilans auch unterschiedliche Bedeutung besitzen kann,
- $R^{2a}$ für Alkyl, Cycloalkyl, Aryl oder Arylalkyl steht, wobei $R^{2a}$ in verschiedenen Einheiten ein und desselben Polycarbosilans auch unterschiedliche Bedeutung besitzen kann,
- $R^4$ für Wasserstoff, Fluor oder Phenyl steht, wobei $R^4$ in verschiedenen Einheiten ein und desselben Polycarbosilans auch unterschiedliche Bedeutung besitzen kann,
- n für den Fall, daß $R^4$ für Phenyl steht, die Zahl 1 bedeutet, und für den Fall, daß $R^4$ für Wasserstoff oder Fluor steht, eine ganze Zahl von 1 bis 6 bedeutet, wobei n in verschiedenen Einheiten ein und desselben Polycarbosilans auch unterschiedliche Bedeutung besitzen kann, und
- p für eine ganze Zahl von n bis 2n-1 steht, wobei p in verschiedenen Einheiten ein und desselben Polycarbosilans auch unterschiedliche Bedeutung besitzen kann,

Dihalogensilane der Formel IV mit einer Dibromid-Verbindung der Formel V

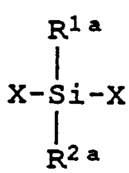

(IV),

$Br\text{-}(C_nF_pR^4{}_{2n-p})\text{-}Br$ (V)

worin

- X für die Halogene Chlor, Brom oder Jod, vorzugsweise für Chlor oder Brom steht, und
- $R^{1a}$, $R^{2a}$, $R^4$, n und p die oben angegebene Bedeutung besitzen,

in einer Grignard-Polykondensationsreaktion mit Magnesiummetall umsetzt, oder

b) zur Herstellung von Polycarbosilanen auf Basis von Struktureinheiten der Formel Ib

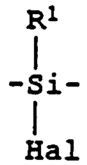

(Ib)

worin
$R^1$ für Wasserstoff, Alkyl, Cycloalkyl, Aryl, Arylalkyl oder Halogen steht, wobei $R^1$ in verschiedenen Einheiten ein und desselben Polycarbosilans auch unterschiedliche Bedeutung besitzen kann,
Hal für Halogen, vorzugsweise für Chlor, Brom oder Fluor, steht, wobei Hal in verschiedenen Einheiten ein und desselben Polycarbosilans auch unterschiedliche Bedeutung besitzen kann, und
$R^4$, n und p die obige Bedeutung besitzen,

ba) Polycarbosilane auf Basis von Struktureinheiten der Formel Ic

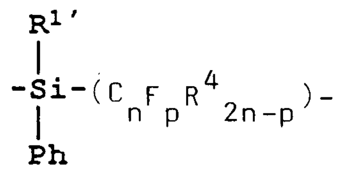

(Ic)

worin
$R^{1'}$ die Bedeutung von $R^1$ besitzt und
$R^4$, n und p die obige Bedeutung besitzen, derart mit wenigstens einem Halogenierungsreagenz unter polaren oder ionischen Reaktionsbedingungen, gegebenenfalls in Gegenwart einer Lewis-Säure, umsetzt, daß die in den Struktureinheiten der allgemeinen Formel Ic enthaltenen Phenylsubstituenten Ph und gegebenenfalls enthaltenen Reste $R^{1'}$ = Ph teilweise oder vollständig durch Halogenatome ausgetauscht werden, und

bb) gegebenenfalls danach das gemäß ba) in das Polycarbosilan eingeführte Halogen unter polaren oder ionischen Reaktionsbedingungen ganz oder teilweise gegen ein anderes Halogenatom austauscht.

Erfindungsgemäß werden in Verfahrensvariante a) zur Herstellung von Polycarbosilanen auf Basis von Struktureinheiten der allgemeinen Formel Ia wenigstens ein Dihalogensilan der allgemeinen Formel IV und wenigstens ein Dibromkohlenwasserstoff der allgemeinen Formel V in Gegenwart von Magnesium und in Gegenwart eines für Grignard-Reaktionen geeigneten organischen Lösungsmittels in einer Grignard-Polykondensationsreaktion miteinander umgesetzt.

In der allgemeinen Formel IV der in Verfahrensvariante a) eingesetzten Dihalogensilane kann R1a Wasserstoff sein. $R^{2a}$ steht dann für Alkyl, Cycloalkyl, Aryl oder Arylalkyl.

In der allgemeinen Formel IV der in a) eingesetzten Dihalogensilane können einer oder beide Reste $R^{1a}$ oder $R^{2a}$ für Alkyl stehen; Alkyl besitzt hierbei die weiter oben bereits angegebene Bedeutung eines gesättigten oder ungesättigten, geradkettigen oder verzweigten Alkylrestes, der gegebenenfalls durch inerte Reste weiter substituiert sein kann. Beispiele sind insbesondere die weiter oben genannten C1- bis C16-Alkylreste, insbesondere aber die genannten C1- bis C6-Alkylreste. Besonders bevorzugt sind niedere, auch ungesättigte niedere Alkylreste mit 1 bis 4 Kohlenstoffatomen.

In der allgemeinen Formel IV der in a) eingesetzten Dihalogensilane können einer oder beide Reste $R^{1a}$ oder $R^{2a}$ für Cycloalkyl stehen; Cycloalkyl steht hierbei mit der weiter oben bereits angegebenen Bedeutung eines gesättigten oder ungesättigten, gegebenenfalls durch inerte Reste weiter substituierten Cycloalkylrestes. Beispiele für Cycloalkyl sind Cyclopentyl, Cyclohexyl oder Cyclopentenyl, Cyclohexenyl.

In der allgemeinen Formel IV der in a) eingesetzten Dihalogensilane können einer oder beide Reste $R^{1a}$ oder $R^{2a}$ für Aryl stehen; Aryl steht hierbei mit der weiter oben bereits angegebenen Bedeutung eines unsubstituierten oder inert substituierten aromatischen Kohlenwasserstoffrestes. Beispiele für Aryl sind Phenyl, Naphtyl, p-Diphenyl, oder Alkylarylgruppen wie Tolyl, Ethylphenyl oder Propylphenyl. Bevorzugtes Aryl ist Phenyl.

In der allgemeinen Formel IV der in a) eingesetzten Dihalogensilane können einer oder beide Reste $R^{1a}$ oder $R^{2a}$ für Arylalkyl stehen; Beispiele für Arylalkylgruppen sind Phenylmethyl oder Phenylethyl.

Als Dihalogensilane eignen sich für das erfindungsgemäße Verfahren unter a) insbesondere die Dichlor- oder Dibromsilane. Beispiele für besonders geeignete Dihalogensilane sind Dimethyldichlorsilan, Dimethyldibromsilan, Diethyldichlorsilan, Diethyldibromsilan, Methylphenyldichlorsilan, Methylphenyldibromsilan, Diphenyldichlorsilan, Diphenyldibromsilan, Mehtylvinyldichlorsilan, Methylhydrogendichlorsilan und vergleichbare Dihalogensilane.

In der allgemeinen Formel V der in Verfahrensvariante a) eingesetzten Dibromkohlenwasserstoffe kann der Rest $R^4$ für Wasserstoff, Fluor oder Phenyl stehen. Als Dibromkohlenwasserstoffe eignen sich für das erfindungsgemäße Verfahren insbesondere partiell oder vollständig fluorierte Dibromkohlenwasserstoffe mit 1 bis 6 Kohlenstoffatomen. Beispiele für bevorzugte und besonders geeignete partiell oder vollständig fluorierte Dibromkohlenwasserstoffe sind Verbindungen der Formeln $Br-(C_nF_pH_{2n-p})-Br$ und $Br-(C_nF_{2n})-Br$, worin die Indices n und p die oben bereits angegebene Bedeutung besitzen; besonders bevorzugt sind überwiegend fluorierte Dibromkohlenwasserstoffe, d.h. Verbindungen der vorstehenden Formel $Br-(C_nF_pH_{2n-p})-Br$ mit $p \gg n$ bis p maximal gleich 2n-1 und insbesondere jedoch perfluorierte Dibromkohlenwasserstoffe der Formel $Br-(C_nF_{2n})-Br$ , wie z.B. Dibromdifluormethan, Dibromtetrafluorethan, Dibromhexafluorpropan, Dibromoctafluorbutan, Dibromdekafluorpentan oder Dibromdedekafluorhexan.

Das im erfindungsgemäßen Verfahren unter a) eingesetzte Magnesium wird als Metall in der Form von Magnesiumpulver, Magnesiumspänen oder Magnesiumgries etc. verwendet. Das Magnesiummetall kann bevorzugt vor der Verwendung durch an sich dem Fachmann bekannte Maßnahmen für die Verwendung in der Grignard-Reaktion vorbehandelt werden. Z.B. ist es empfehlenswert, das Magnesium vor der Reaktion zu entfetten und durch Trocknen von anzuhaftender Feuchtigkeit zu befreien oder gegebenenfalls mit geringen Mengen an niederen Brom- oder Jod-haltigen Kohlenwasserstoffen wie Dibromethan, Dibrompropan, Dijodpropan etc., vorzugsweise aber mit elementarem Jod anzuätzen. Die Menge des zu verwendenden Magnesiummetalls beträgt etwa 2 Mol bezogen auf das eingesetzte Dihalogensilan bzw. den eingesetzten Dibromkohlenwasserstoff. Das Dihalogensilan und der Dibromkohlenwasserstoff werden in etwa äquimolaren Mengen in der Reaktion eingesetzt.

Das organische Lösungsmittel, in welchem die Grignard-Polykondensationsreaktion stattfindet, kann ein beliebiges, trockenes mit Grignard-Reagentien verträgliches Lösungsmittel sein, insbesondere ein Ether wie Diethylether, Dioxan, Tetrahydrofuran etc.

Die erdindungsgemäße Grignard-Polykondensationsreaktion wird z.B. im allgemeinen so geführt, daß zunächst die Ausgangsverbindungen, das Dihalogensilan und der Dibromkohlenwasserstoff, mit dem Magnesium bevorzugt in Ether vorgelegt werden. Anschließend wird tropfenweise Tetrahydrofuran zugesetzt und die exotherme Reaktion durch Einstellung der Zutropfgeschwindigkeit von Tetrahydrofuran so kontrolliert, daß gleichmäßiges Sieden stattfindet. Für gute Ergebnisse sollten trockene Reaktionsbedingungen eingehalten und die Reaktion unter Schutzgasatmosphäre und unter Rühren ausgeführt werden. Geeignete Schutzgase sind z.B. Stickstoff oder Edelgase wie Argon. Die sich während der Reaktion einstellende Temperatur hängt vom Siedepunkt des verwendeten Lösungsmittels ab. Nach Abschluß der exothermen Reaktion wird, um sicherzustellen, daß eine vollständige Umsetzung stattfindet, die Reaktionsmischung in der Regel noch bei Raumtemperatur über einen längeren Zeitraum gerührt. Typischerweise wird die Reaktion in einem Zeitraum von 1 bis 48 Stunden ausgeführt. Zur Aufarbeitung des Reaktionsgemisches und zur Isolierung des gebildeten Polycarbosilans kann in an sich bekannter Weise für die Aufarbeitung von Grignard-Reaktionsansätzen vorgegangen werden. Beispielsweise werden Reste von nichtumgesetzten Grignard-Reagentien durch Zugabe von oder Eingießen in Wasser, Salzsäure, wäßrige Ammoniumchloridlösung etc. zersetzt und das Polycarbosilan mit einem geeigneten organischen Lösungsmittel, beispielsweise mit halogenierten Kohlenwasserstoffen wie Methylenchlorid, Chloroform, Tetrachlorkohlenstoff oder Fluorchlorkohlenwasserstoffen aus dem Reaktionsgemisch extrahiert und in an sich bekannter Weise durch Entfernung des Lösungsmittels als Substanz gewonnen.

Durch das erfindungsgemäße Verfahren unter a) wird eine einfache und allgemein anwendbare Methode zur bequemen Hestellung unterschiedlicher Polycarbosilane zur Verfügung gestellt. Insbesondere lassen sich nach diesem Verfahren Polycarbosilane herstellen, deren Si-Einheiten durch partiell oder vollständig fluorierte Kohlenwasserstoffbrücken miteinander verbunden sind. Das erfindungsgemäße Verfahren gestattet es, durch Variation von Art und Anzahl der eingesetzten Reaktanden eine Vielzahl, interessanter und bisher nicht zugänglicher Polycarbosilane, insbesondere in den Kohlenwasserstoffgruppen partiell oder vollständig fluorierter Polycarbosilane herzustellen.

In einer weiteren Variante des erfindungsgemäßen Verfahrens a) ist es möglich, sofern erwünscht, eine zusätzliche gezielte Vernetzung der linearen Polycarbosilanketten auf Basis der allgemeinen Strukturformel Ia zu bewirken. Je nach angestrebten Vernetzungsgrad werden dann bis zu 50 Mol-% des eingesetzten

Dihalogensilans IV durch ein Trihalogensilan der Formel $RSiX_3$ ersetzt, worin X die Bedeutung Halogen, vorzugsweise Chlor oder Brom, und R die für $R^1$ oben angegebene Bedeutung Wasserstoff, Alkyl, Cycloalkyl, Aryl oder Arylalkyl besitzt. Das Trihalogensilan $RSiX_3$ kann entweder gleich in das Reaktandengemisch aus Dihalogensilan IV, Dibromkohlenwasserstoff V und Magnesium eingemischt werden; es kann aber auch getrennt von diesem Reaktandengemisch zugetropft werden. Beispiele für verwendbare Trihalogensilane $RSiX_3$ sind Trichlorsilan, Methyltribromsilan, Methyltrichlorsilan oder Phenyltrichlorsilan. Nach dieser Verfahrensvariante werden die oben beschriebenen vernetzten Polycarbosilane erhalten, die zusätzlich Verzweigungsgruppen der Formel II enthalten.

Ferner läßt sich in einer weiteren Verfahrensvariante eine Vernetzung der linearen Polycarbosilanketten auf Basis dser allgemeinen Strukturformel Ia durch Zugabe von Tetrahalogensilanen wie Tetrachlorsilan oder Tetrabromsilan erreichen. Es werden die oben ebenfalls beschriebenen vernetzten Polycarbosilane erhalten, die zusätzlich Verzweigungsgruppen der Formel III enthalten.

Darüber hinaus kann in einer weiteren Verfahrensvariante der Kondensationsgrad der herzustellenden kettenförmigen oder vernetzten Polycarbosilane gesteuert werden, indem die Grignard-Kondensation durch Zusatz von Kondensationsabbruch-Reagentien gestoppt wird. Geeignete Reagentien für den Abbruch der Kondensationsreaktion sind Monohalogensilane $R'_3SiX$, worin X die Bedeutung Halogen, vorzugsweise Chlor oder Brom, und R' Bedeutung Alkyl, Cycloalkyl, Aryl oder Arylalkyl besitzt; weitere geeignete Reagentien für den Abbruch der Kondensationsreaktion sind z.B. fluorierte Monobromkohlenwasserstoffe. Beispiele für geeignete Monohalogensilane sind Trimethylchlorsilan, Trimethylbromsilan oder Diphenylmethylchlorsilan. Beispiele für geeignete fluorierte Monobromkohlenwasserstoffe sind Trifluorbrommethan oder Pentafluorbromethan.

Zur Durchführung des Verfahrens b) zur Herstellung von Polycarbosilanen auf Basis von Struktureinheiten der Formel Ib werden als Edukte arylsubstituierte Polycarbosilane, gegebenenfalls in Gegenwart einer Lewis-Säure als Katalysator, unter Schutzgasatmosphäre in einem unter den Reaktionsbedingungen inerten organischen Lösungsmittel unter weitgehendem Wasserausschluß mit wenigstens einem polar oder ionisch reagierenden Halogenierungsreagenz bis zu mehreren Stunden umgesetzt.

Als Polycarbosilanedukte können hierfür an sich alle nach Verfahren a) hergestellten Polycarbosilane dienen, die Phenylsubstituenten an den Siliciumatomen tragen.

Für die Herstellung der erfindungsgemäßen an den Si-Atomen halogenierten Polycarbosilane aus den vorstehend genannten phenylsubstituierten Polycarbosilanen können alle an sich üblichen Halogenierungsreagentien eingesetzt werden, die in polarer oder ionischer Weise reagieren. Ausgenommen sind daher alle solchen Halogenierungsreagentien, die ausschließlich radikalisch reagieren können. Geeignete Halogenierungsreagentien für die genannten Umsetzungen sind Halogenwasserstoffsäuren wie HBr, HCl oder HF; Ammoniumsalze dieser Halogenwasserstoffsäuren wie $NH_4Br$, $NH_4Cl$ oder $NH_4F$; saure Alkalifluoride wie Natriumhydrogenfluorid ($NaHF_2$ bzw. $NaF \cdot HF$) oder saure Kaliumfluoride wie $KF \cdot (HF)_n$ mit $n = 1$ bis 3; Fluorwasserstoffaddukte an Ammoniumfluorid wie $NH_4F \cdot (HF)_n$ oder $NH_4F \cdot HF$; oder andere Halogenierungsreagentien wie Phosphorpentachlorid, Antimonpentachlorid, Antimontrifluorid, Arsentrifluorid, Titantetrafluorid, Zinntetrafluorid, Kupferdifluorid, Zinkdifluorid etc. Bevorzugte Halogenierungsreagentien sind hierbei die Halogenwasserstoffsäuren und deren Ammoniumsalze, die Fluorwasserstoff-Addukte an Ammoniumfluorid und die sauren Alkalifluoride. Es können zwar auch elementare Halogene unter polaren oder ionischen Reaktionsbedingungen eingesetzt werden. Sofern ein Teil der Phenylsubstituenten im halogenierten Polycarbosilan erhalten bleiben soll, ist dabei jedoch zu beachten, daß (neben dem Austausch von Phenylsubstituenten gegen Halogenatome) in den verbleibenden Phenylsubstituenten auch eine elektrophile aromatische Substitution von Wasserstoffatomen durch Halogenatome stattfinden kann. Eine solche elektrophile aromatische Substitution in den Phenylsubstituenten findet bei Einsatz der übrigen, obengenannten Halogenierungsreagentien dagegen nicht statt.

Die polare oder ionische Reaktionsweise des Halogenierungsreagenzes wird dadurch gewährleistet, daß die eingesetzten Halogenierungsreagentien einerseits von sich aus bereits polar oder ionisch reagierende Verbindungen sind, wie z.B. HCl, HF, $NH_4Cl$, $NH_4F$, $NH_4F \cdot (HF)_n$, $NaF \cdot HF$, $KF \cdot (HF)_n$, $PCl_5$, $SbCl_5$, $SbF_3$, $AsF_3$, $TiF_4$, $SnF_4$, $CuF_2$, $ZnF_2$ etc. Oder andererseits werden die polaren oder ionischen Reaktionsbedingungen bei Verwendung von Halogenierungsreagentien, die sowohl polar oder ionisch als auch radikalisch reagieren können (z.B. HBr, Halogene), dadurch sichergestellt, daß die Umsetzungen in Gegenwart von Lewis-Säure-Katalysatoren ausgeführt werden. Aber auch bei Umsetzungen mit Halogenierungsreagentien, die von sich aus zwar bereits polar und ionisch reagieren und die selbst keine Lewis-Säuren sind, kann die Anwesenheit von Lewis-Säure-Katalysatoren vorteilhaft sein, so z.B. bei Umsetzungen mit Chlorwasserstoff. Als Lewis-Säure-Katalysatoren eignen sich für das erfindungsgemäße Verfahren zur Herstellung halogenierter Polycarbosilane die als solche an sich bereits bekannten, elektrophilen und katalytisch wirksamen Elektronenpaarakzeptor-Verbindungen der Halogene mit den Elementen Bor, Aluminium, Phosphor, Antimon, Arsen, Eisen, Zink oder Zinn. Beispiele für Lewis-Säure-Katalysatoren sind Verbindungen wie $BF_3$, $AlCl_3$, $AlBr_3$, $PCl_5$, $SbCl_5$, $SbF_3$, $ZnF_2$ etc.

Das organische Lösungsmittel, in welchem die Halogenierungsumsetzungen des Verfahrens b) stattfinden, kann ein beliebiges mit den Halogenierungsreagentien und den gegebenenfalls anwesenden Lewis-Säure-Katalysatoren verträgliches Lösungsmittel sein, in dem die als Edukte verwendeten Polycarbosilane löslich sind. Vorzugsweise ist dieses organische Lösungsmittel auch für die erfindungsgemäß herzustellenden halogenierten Polycarbosilane ein Lösungsmittel. Geeignete Lösungsmittel können z.B. einerseits Kohlenwasserstoffe wie Benzol, Toluol, Xylol oder Paraffine, oder andererseits voll- oder teilhalogenierte Kohlenwasserstoffe wie Tetrachlorkohlenstoff, Chloroform, Methylenchlorid, Dichlorethan, Fluorchlorkohlenwasserstoffe oder wasserstoffhaltige Fluorchlorkohlenwasserstoffe sein. Vorteilhaft werden solche Lösungsmittel verwendet, die sich nach der Reaktion leicht durch Destillation wieder entfernen lassen. Die Menge des Lösungsmittels kann hierbei je nach den praktischen Erfordernissen in weiten Bereichen variiert werden.

Die Halogenierungsumsetzungen des Verfahrens b) können in bequemer Weise in Temperaturbereichen um Raumtemperatur ausgeführt werden. Weiterhin werden die Reaktionen im allgemeinen unter einem geeigneten Schutzgas durchgeführt. Geeignete Schutzgase sind z.B. Stickstoff oder Argon. Der Halogenierungsgrad der Produkte kann bei diesen Umsetzungen leicht gesteuert werden, indem man einerseits die Zahl der austauschbaren Substituenten (z.B. Phenyl) im Polycarbosilanedukt vorgibt, oder indem man andererseits die Reaktionszeit und/oder die Menge an zugeführtem Halogenierungsreagenz erhöht oder vermindert.

Die Reaktion wird im allgemeinen so geführt, daß man gasförmige Halogenierungsreagentien in eine wasserfreie Lösung des Polycarbosilans einleitet, die gegebenenfalls katalytische Mengen an Lewis-Säure-Katalysator enthält. Werden dagegen feste Halogenierungsreagentien, wie z.B. saure Alkalifluoride, Ammoniumfluorid oder Ammoniumfluorid-HF-Addukte verwendet, so werden zunächst diese Halogenierungsreagentien, gegebenenfalls zusammen mit einem Lewis-Säure-Katalysator, im Reaktionsgefäß als solche (z.B. in Pulverform) oder in einem Lösungsmittel suspendiert vorgelegt. Hierzu wird anschließend eine Lösung des Eduktpolycarbosilans zugetropft.

Nach erfolgter Umsetzung kann man das halogenierte Polycarbosilan durch jede geeignete Methode aus dem Reaktionsgemisch gewinnen. Ist das halogenierte Polycarbosilan im Lösungsmittel löslich, so lassen sich die sonstigen unlöslichen Komponenten, z.B. gegebenenfalls der im Lösungsmittel suspendierte Lewis-Säure-Katalysator, durch Filtration abtrennen. Das im Lösungsmittel zurückbleibende halogenierte Polycarbosilan kann danach gegebenenfalls weiteren Reinigungsmaßnahmen unterworfen werden und durch Entzug des Lösungsmittels isoliert werden. Sind die gebildeten halogenierten Polycarbosilane im Lösungsmittel aber unlöslich, so können sie durch ein geeignetes anderes Lösungsmittel in Lösung gebracht werden, durch Filtration von unlöslichen Bestandteilen abgetrennt und durch Entzug des Lösungsmittels isoliert werden. Nachfolgend können die isolierten Produkte zur Entfernung von noch anhaftenden Lösungsmittelresten zusätzlich im Vakuum und gegebenenfalls bei erhöhten Temperaturen behandelt ("getrocknet") werden.

Nach diesem Verfahren unter b) können an den Si-Atomen sowohl einheitlich halogenierte, also mit nur einer Art von Halogenatom an den Si-Atomen, als auch gemischt halogenierte Polycarbosilane, also solche Polycarbosilane mit verschiedenen Halogenatomen an den Si-Atomen, erhalten werden. Einheitlich an den Si-Atomen halogenierte Polycarbosilane werden z.B. erhalten, indem man als Ausgangsverbindung ein nicht an den Si-Atomen halogeniertes Polycarbosilan der oben beschriebenen Art mit nur einem einzigen Halogenierungsmittel umsetzt. Andererseits lassen sich auch an den Si-Atomen gemischt halogenierte Polycarbosilane auf direktem Wege aus den nicht an den Si-Atomen halogenierten Edukt-Polycarbosilanen herstellen, indem man letztere gleichzeitig mit z.B. zwei Halogenierungsmitteln umsetzt, die verschiedene Halogenatome tragen; beispielsweise lassen sich so mit einem HCl/HBr-Gasgemisch Chlor-Brom-haltige Polycarbosilane gewinnen. Die Reaktionsbedingungen sind hierbei analog zu den Umsetzungen mit nur einem Halogenierungsreagenz.

Weiterhin ist es möglich, einheitlich an den Si-Atomen halogenierte Polycarbosilane ausgehend von bereits mit einem anderen Halogenatom an den Si-Atomen halogenierten Polycarbosilanen durch vollständigen Halogenaustausch herzustellen; z.B. können auf diese Weise Chlor- oder Bromatome vorteilhaft gegen Fluoratome an den Si-Atomen des Polycarbosilans ausgetauscht werden. Führt man dagegen nur einen teilweisen Halogenaustausch an den Si-Atomen durch, erhält man aus dem eingesetzten einheitlich an den Si-Atomen halogenierten Polycarbosilan als Produkt ein an den Si-Atomen gemischt halogeniertes Polycarbonsilan; so lassen sich z.B. Si-Chlor-Fluor-haltige Polycarbosilane aus Si-chlorierten Polycarbosilanen durch teilweisen Austausch der Si-Chloratome gegen Fluoratome herstellen. Ferner ist es auch möglich, gemischt Si-halogenierte Polycarbosilane in andere gemischt Si-halogenierte Polycarbosilane umzuwandeln;

beispielsweise lassen sich so Si-Chlor-Fluorhaltige Polycarbosilane auch aus Si-Chlor-Brom-haltigen Polycarbosilanen herstellen. Hierbei kann die Reaktion leicht so gesteuert werden, daß zunächst nur die Si-Bromatome vollständig gegen Fluoratome ausgetauscht werden, die Si-Chloratome dagegen im Polycarbosilan erhalten bleiben. Die Reaktionsbedingungen für die Si-Halogenaustauschreaktionen sind hierbei analog zu den oben bereits für die Si-Halogenierungsreaktionen beschriebenen Bedingungen. Durch diesen Si-Halogenaustausch wird es möglich, auch solche an den Si-Atomen halogenierte Polycarbosilane leicht zu gewinnen, die auf direktem Wege (d.h. ohne Umhalogenierung) nur schwer oder nur mit unbefriedigender Ausbeute herstellbar sind. Als Halogenatom, welches gegen ein anderes an den Si-Atomen ausgetauscht werden soll, eignet sich das Bromatom ganz besonders vorteilhaft.

Die für diesen Halogenaustausch besonders geeigneten Fluorierungsmittel sind Fluorwasserstoff, Ammoniumfluorid oder Addukte von Fluorwasserstoff an Ammoniumfluorid, saure Alkalifluoride und auch $SbF_3$, $AsF_3$, $TiF_4$, $SnF_4$, $CuF_2$, $ZnF_2$ etc. Bevorzugt werden die Ammoniumsalze, z.B. $NH_4F \bullet (HF)_n$, $NH_4F \bullet HF$ oder $NH_4F$, bei deren Einsatz sich die Gegenwart von zusätzlichen Lewis-Säure-Katalysatoren erübrigt. Die Reaktionen lassen sich weiterhin leicht so führen, daß entweder alle im Edukt enthaltenen Chlor- oder Bromatome, nur ein Teil der im Edukt enthaltenen Chlor- oder Bromatome ausgetauscht werden. Aus Chlor-Brom-halti gen Polycarbosilanen kann man darüber hinaus z.B. auch leicht nur die Bromatome teilweise oder vollständig austauschen, ohne den Gehalt an Chlor zu verändern; so erhält man bei vollständigem Austausch von Brom gegen Fluor Chlor-Fluor-haltige Polycarbosilane bzw. bei nur teilweisem Austausch der Bromatome gemischt an den Si-Atomen halogenierte Polycarbosilane, die gleichzeitig Fluor-, Chlor- und Bromatome enthalten. Unter schärferen Reaktionsbedingungen werden auch die im Polycarbosilan gegebenenfalls noch anwesendenden Arylsubstituenten ganz oder teilweise durch Fluoratome ausgetauscht.

Die erfindungsgemäßen Polycarbosilane zeichnen sich durch definierte Eigenschaften aus, die durch gezielte Variation der Molekülgröße, Zahl und Art der Vernetzungen, durch entsprechende Wahl der Gruppen $R^1$, $R^2$, und $R^4$, der Indices n und p, sowie durch Art und Gehalt der Halogenatome bestimmt werden. Bei den Si-halogenierten Polycarbosilanen zeichnen sich insbesondere die Si-fluorierten Polycarbosilane aufgrund ihrer unerwartet großen Stabiliaus, wodurch sie für zahlreiche Anwendungen besonders geeignet sind. Die reaktionsfähigeren Si-Brom-haltigen Produkte eignen sich insbesondere vorteilhaft als Edukte für Halogenaustauschreaktionen sowie andere Austauschreaktionen. Besonders günstige Eigenschaften weisen vor allem die Polycarbosilane mit teilweise oder vollfluorierten Kohlenwasserstoffbrücken auf, die in Abhängigkeit des Fluorierungsgrades ein breites Spektrum an flüssigen, viskosen und festen Produkten liefern. Ähnlich günstige chemische und physikalische Eigenschaften werden auch bei den Si-halogenierten, insbesondere Si-Fluor-haltigen Polycarbosilanen erreicht.

Die erfindungsgemäßen Polycarbosilane, insbesondere aber die Brücken- und/oder Si-fluorierten Polycarbosilane, eignen sich als wertvolle Ausgangspolymere für die Herstellung technisch hochwertiger Siliciumcarbid-Keramiken, sind anererseits aber auch hervorragend für diverse andere technische Anwendungen geeignet, z.B. als Bindematerialien oder Beschichtungsmaterialien. Weitere Anwendungsmöglichkeiten sind Verwendungen für Imprägnierungen, Fibern, sowie funktionale Flüssigkeiten wie z.B. Hydrauliköle und sonstige Anwendungsgebiete, in denen auch konventionelle Polycarbosilane zum Einsatz gelangen.

Die erfindungsgemäßen Verfahren zur Herstellung der erfindungsgemäßen, insbesondere der Brücken- und/oder Si-fluorierten Polycarbosilane zeichnen sich dadurch aus, daß sie es im Gegensatz zu den bisher bekannten Verfahren ermöglichen, gezielt und genau definierte, insbesondere auch in den Kohlenwasserstoffbrücken fluorierte, ggf. auch Si-halogenierte, Polycarbosilane jeder gewünschten Zusammensetzung und Konsistenz herzustellen. Die Eigenschaften der erfindungsgemäßen Polycarbosilane können durch diese Verfahren in der Art und in dem Grad der Brückenfluorierung, sowie auch der Si-Halogenierung, gezielt und in einfacher Weise modifiziert werden. Hierdurch können eine Vielzahl, insbesondere Brückenfluorierter, Polycarbosilane zur Verfügung gestellt werden, die durch gezielte Modifizierung optimal an den jeweiligen Anwendungszweck angepaßt werden können.

Im folgenden wird die Erfindung anhand von Beispielen weiter erläutert, ohne sie jedoch in ihrem Umfang zu beschränken. Die in den Beispielen enthaltenen Teil- und Prozentangaben sind als Gewichtsprozentangaben zu verstehen, sofern nichts anderes angegeben ist. Alle Umsetzungen wurden in Standard-Laboratoriumsapparaturen durchgeführt. Die hergestellten Verbindungen wurden durch Elementaranalye und spektroskopische Methoden (NMR = Kernresonanzspektroskopie: $^1$H-NMR mit TMS als Standard, $^{19}$F-NMR mit $CCl_3F$ als Standard); IR = Infrarotspektroskopie; MS = Massenspektroskopie analysiert. Verwendete Abkürzungen bedeuten: Ph = Phenyl, Me = Methyl, Vi = Vinyl, TMS = Tetramethylsilan.

Beispiel 1:

0,075 Mol Diphenyldichlorsilan (18,9 g; 15,3 ml) und 0,075 Mol Difluordibrommethan (15,75 g; 6,9 ml) wurden in 100 ml Diethylether mit 3,9 g Magnesiumspänen (vorher mit Jod angeätzt) unter Argon tropfenweise mit 5 bis 10 ml Tetrahydrofuran versetzt. Nach dem Anspringen der Reaktion wurden weitere 30 bis 40 ml Tetrahydrofuran tropfenweise zugegeben und die exotherm unter Sieden des Lösungsmittels ablaufende Reaktion durch die Zugabegeschwindigkeit des Lösungsmittels kontrolliert. Nach Ablauf der Reaktion wurde das erhaltene Reaktionsgemisch noch 15 h bei Raumtemperatur gerührt. Anschließend wurde die Reaktionsmischung zu einer Ammoniumchlorid-Lösung gegeben, mit 250 ml Tetrachlormethan versetzt und die organische Phase abgetrennt. Die organische Phase wurde danach mit ca. 300 ml Wasser gewaschen und anschließend das Lösungsmittel abgedampft. Der Rückstand wurde noch 2 h bei 110 °C im Vakuum getrocknet. Man erhielt 16,9 g eines Polydiphenylsilyldifluormethylcarbosilansals eine rötliche, viskose Flüssigkeit. Die Elementaranalyse dieses Materials ergab einen Gehalt an 10,6 % Si. $^{1}$H-NMR-Analyse: 7,2 ppm (Phenyl). $^{19}$F-NMR-Analyse: -140 ppm ($CF_2$). IR-Analyse ($cm^{-1}$): 3070, 3040 (C-H-Streckschwingung, Phenyl); 2960, 2930 (C-H-Streckschwingung); 1600, 1500 (C=C); 1100 - 1000 und 840 - 680 (Carbosilan-Gerüstschwingungen); die $CF_2$-Schwingungsbanden fallen mit den Gerüstschwingungen zusammen.

Beispiel 2 bis Beispiel 9:

Analog zu Beispiel 1 wurden die nachfolgenden Polycarbosilane durch Grignard-Polykondensation hergestellt. Hierzu wurden jeweils 0,075 Mol eines Dichlorsilans mit 0,075 Mol eines Dibromkohlenwasserstoffes zur Reaktion gebracht. Die in diesen Beispielen umgesetzte Menge an Dichlorsilan betrug: 18,9 g Diphenyldichlorsilan ($Ph_2SiCl_2$); 14,3 g Methylphenyldichlorsilan ($MePhSiCl_2$); 9,6 g Dimethyldichlorsilan ($Me_2SiCl_2$); 10,5 g Vinylmethyldichlorsilan ($MeViSiCl_2$); 8,6 g Methylhydrogendichlorsilan ($MeHSiCl_2$). Die hier umgesetzte Menge an Dibromkohlenwasserstoff betrug: 19,5 g 1,2-Dibromtetrafluorethan ($BrC_2F_4Br$); 15,8 g Dibromdifluormethan ($CF_2Br_2$). Es wurden die in der Tabelle 1 zusammengestellten Ergebnisse erhalten.

Beispiel 20:

15 g des Poly-methylphenylsilyl-tetrafluorethylen-carbosilans $(-SiMePh-C_2F_4-)_n$ aus Beispiel 6 wurden in 400 ml trockenen Benzol gelöst und mit 1,3 g Aluminiumbromid versetzt. Durch die Lösung wurde über einen Zeitraum von 30 h bei Raumtemperatur Bromwasserstoff geleitet. Nach Abschluß der Reaktion wurde Aluminiumbromid abfiltriert, Benzol abdestilliert und der zurückbleibende Feststoff bei 100 °C im Vakuum getrocknet. Man erhielt 12,8 g eines braunen hochviskosen Br-haltigen Polycarbosilans. Die Elementaranalyse dieses Materials ergab einen Gehalt an 23,5 % Si und 32,4 % Br. $^{1}$H-NMR (ppm): 0,5 ($CH_3$); sehr schwaches Signal bei 7,2 (geringer Rest an nicht ausgetauschten Phenylgruppen). $^{19}$F-NMR (ppm): -126,7 bis -136,3 ($CF_2$).

Beispiel 21:

Zu 10 g Ammoniumfluorid (zuvor im Vakuum bei 60 °C getrocknet) und 100 ml Chloroform wurde unter Schutzgas eine Lösung von 6,3 g des in Beispiel 20 erhaltenen bromierten Polycarbosilans in 200 ml Chloroform bei Raumtemperatur unter Rühren und Schutzgas zugetropft. Nach einer Reaktionszeit von 2 Tagen wurden 75 ml Wasser zugegeben. Anschließend wurde die organiche Phase abgetrennt, filtriert, das Lösungsmittel abgedampft und der verbliebene Rückstand bei maximal 80 °C im Vakuum getrocknet. Man erhielt 4 g eines braunen, viskosen F-haltigen Polycarbosilans. Die Elementaranalyse dieses Materials ergab einen Gehalt an 26,4 % Si; 27,6 % C; 4,8 % H; 50,4 % F. $^{1}$H-NMR
(ppm): 0,5 ($CH_3$); nur sehr schwaches Signal bei 7,2 (geringer Anteil an restlichen Phenylgruppen). $^{19}$F-NMR
(ppm): -128,0 bis -137,0 ($CF_2$).
(ppm): -128,0 bis -137,0 ($CF_2$).

Tabelle 1:

| Bsp. *) | eingesetzter Kohlenwasserstoff | eingesetztes Dichlorsilan | Polycarbosilan Ausbeute (g) | Polycarbosilan Eigenschaften |
|---|---|---|---|---|
| 2 | $CF_2Br_2$ | $MePhSiCl_2$ | 9,3 | Bräunliche, viskose Flüssigkeit: 11,4 % Si.<br>$^1H$-NMR (ppm): 7,2 (Ph); 0,5 ($CH_3$).<br>$^{19}F$-NMR (ppm): -134; -135 ($CF_2$).<br>IR ($cm^{-1}$): wie Bsp. 1; zusätzlich 1257 (Si-$CH_3$; Streckschwingung). |
| 3 | $CF_2Br_2$ | $Me_2SiCl_2$ | 1,7 | Braune, viskose Flüssigkeit.<br>$^1H$-NMR (ppm): 0,5 ($CH_3$).<br>IR ($cm^{-1}$): 2960, 2930 (C-H-Streckschwingung); 1257 (Si-$CH_3$; Streckschwingung); 1100 - 1000, 840 - 680 (Carbosilan-Gerüstschwingungen); die $CF_2$-Schwingungsbanden fallen mit den Carbosilan-Gerüstschwingungen zusammen. |
| 4 | $CF_2Br_2$ | $MeViSiCl_2$ | 3,7 | Braune, viskose Flüssigkeit: 8,8 % Si.<br>$^1H$-NMR (ppm): 6,2 (Vinyl-H); 0,5 ($CH_3$).<br>$^{19}F$-NMR (ppm): -135 ($CF_2$).<br>IR ($cm^{-1}$): wie Bsp. 3; zusätzlich 1600, 1500 (C=C). |

*) Bsp. = Beispiel

Fortsetzung von Tabelle 1:

| Bsp. | eingesetzter Kohlenwasserstoff | eingesetztes Dichlorsilan | Polycarbosilan Ausbeute (g) | Polycarbosilan Eigenschaften |
|---|---|---|---|---|
| 5 | $BrC_2F_4Br$ | $Ph_2SiCl_2$ | 14,9 | Zäher, brauner Feststoff: 13,8 % Si.<br>$^1H$-NMR (ppm): 7,2 (Ph).<br>$^{19}F$-NMR (ppm): -140 ($CF_2$).<br>IR ($cm^{-1}$): wie Bsp. 1. |
| 6 | $BrC_2F_4Br$ | $MePhSiCl_2$ | 10,8 | Rotbraune Flüssigkeit: 17,0 % Si.<br>$^1H$-NMR: 7,2 (Ph); 0,5 ($CH_3$).<br>$^{19}F$-NMR (ppm): -134,8 ($CF_2$)<br>IR ($cm^{-1}$): wie Bsp. 2. |
| 7 | $BrC_2F_4Br$ | $Me_2SiCl_2$ | 3,7 | Braune Flüssigkeit: 12,6 % Si.<br>$^1H$-NMR (ppm): 0,5 ($CH_3$).<br>$^{19}F$-NMR -130 bis -133 ($CF_2$).<br>IR ($cm^{-1}$): wie Bsp. 3. |
| 8 | $BrC_2F_4Br$ | $MeViSiCl_2$ | 6,6 | Braune Flüssigkeit: 23,5 % Si.<br>$^1H$-NMR (ppm): 6,2 (Vinyl-H); 0,5 ($CH_3$).<br>$^{19}F$-NMR (ppm): -135,9 ($CF_2$).<br>IR ($cm^{-1}$): wie Bsp. 4. |
| 9 | $BrC_2F_4Br$ | $MeHSiCl_2$ | 2,7 | Braune Flüssigkeit: 22,7 % Si.<br>$^1H$-NMR (ppm): 4,7 (SiH); 0,5 ($CH_3$).<br>$^{19}F$-NMR (ppm): -133 ($CF_2$).<br>IR ($cm^{-1}$): wie Bsp. 3; zusätzlich: 2100 (Si-H-Streckschwingung). |

## Patentansprüche

**1.** Polycarbosilane auf Basis von Struktureinheiten der allgemeinen Formel I

$$-\overset{\displaystyle R^1}{\underset{\displaystyle R^2}{Si}}-(C_nF_pR^4{}_{2n-p})- \qquad (I)$$

worin

- $R^1$ für Wasserstoff, Alkyl, Cycloalkyl, Aryl, Arylalkyl oder Halogen steht, wobei $R^1$ in verschiedenen Einheiten ein und desselben Polycarbosilans auch unterschiedliche Bedeutung besitzen kann,
- $R^2$ für Alkyl, Cycloalkyl, Aryl, Arylalkyl oder Halogen steht, wobei $R^2$ in verschiedenen Einheiten ein und desselben Polycarbosilans auch unterschiedliche Bedeutung besitzen kann,
- $R^4$ für Wasserstoff, Fluor oder Phenyl steht, wobei $R^4$ in verschiedenen Einheiten ein und desselben Polycarbosilans auch unterschiedliche Bedeutung besitzen kann,
- n für den Fall, daß $R^4$ für Phenyl steht, die Zahl 1 bedeutet, und für den Fall, daß $R^4$ für Wasserstoff oder Fluor steht, eine ganze Zahl von 1 bis 6 bedeutet, wobei n in verschiedenen Einheiten ein und desselben Polycarbosilans auch unterschiedliche Bedeutung besitzen kann, und
- p für eine ganze Zahl von n bis 2n-1 steht, wobei p in verschiedenen Einheiten ein und desselben Polycarbosilans auch unterschiedliche Bedeutung besitzen kann.

**2.** Polycarbosilane nach Anspruch 1, dadurch gekennzeichnet, daß in den Struktureinheiten der allgemeinen Formel I der Rest $R^4$ und die Indices n und p jeweils nur eine einzige Bedeutung besitzen.

**3.** Polycarbosilane nach einem der Ansprüche 1 bis 2, dadurch gekennzeichnet, daß in den Struktureinheiten der allgemeinen Formel I jeder der Substituenten $R^1$ und $R^2$ jeweils nur eine einzige Bedeutung besitzt.

**4.** Polycarbosilane nach Anspruch 1, dadurch gekennzeichnet, daß in den Struktureinheiten der allgemeinen Formel I der Rest $R^4$ für Wasserstoff oder Fluor steht.

**5.** Polycarbosilane nach Anspruch 1, dadurch gekennzeichnet, daß in den Struktureinheiten der allgemeinen Formel I der Rest $R^4$ für Fluor steht.

**6.** Polycarbosilane nach Anspruch 1 dadurch gekennzeichnet, daß n eine ganze Zahl von 1 bis 3 bedeutet.

**7.** Polycarbosilane nach Anspruch 1, dadurch gekennzeichnet, daß in den Struktureinheiten der Formel I der Rest $R^1$ für Wasserstoff, Methyl, Ethyl, Propyl, Butyl, Vinyl, Phenyl oder Halogen steht und der Rest $R^2$ für Methyl, Ethyl, Propyl, Butyl, Vinyl, Phenyl oder Halogen steht.

**8.** Polycarbosilane nach Anspruch 1, dadurch gekennzeichnet, daß in den Struktureinheiten der allgemeinen Formel I der Rest $R^1$ und $R^2$ für Halogen steht.

**9.** Polycarbosilane nach Anspruch 1, dadurch gekennzeichnet, daß in den Struktureinheiten der allgemeinen Formel I der Rest $R^1$ und $R^2$ für Chlor, Brom oder Fluor, steht.

**10.** Polycarbosilane nach Anspruch 9, dadurch gekennzeichnet, daß in den Struktureinheiten der allgemeinen Formel I beide Reste $R^1$ und $R^2$ für Fluor stehen.

**11.** Polycarbosilane nach einem der vorhergehenden Ansprüche, dadurch gekennzeichnet, daß sie durch Verzweigungsgruppen der allgemeinen Formeln II und/oder III

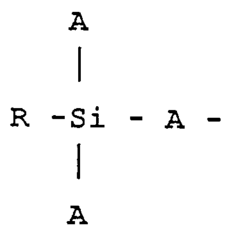 (II), 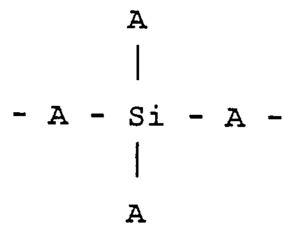 (III)

worin

A für einen Rest $C_nF_pR^4{}_{2n-p}$ steht, worin $R^4$ und die Indices n und p die obige Bedeutung besitzen und

R für Wasserstoff oder Alkyl, Cycloalkyl, Aryl oder Arylalkyl steht,

vernetzt sind.

**12.** Polycarbosilane nach einem der vorhergehenden Ansprüche, dadurch gekennzeichnet, daß sie als Endgruppen Halogen-, Alkyl-, Cycloalkyl-, Arylalkyl-, Aryl-, Alkoxyl- oder Hydroxylgruppen aufweisen.

**13.** Verfahren zur Herstellung von Polycarbosilanen des Anspruchs 1, dadurch gekennzeichnet, daß man zur Herstellung von Polycarbosilanen auf Basis von Struktureinheiten der allgemeinen Formel Ia

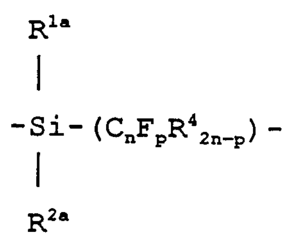 (Ia)

worin

$R^{1a}$ für Wasserstoff, Alkyl, Cycloalkyl, Aryl oder Arylalkyl steht, wobei $R^{1a}$ in verschiedenen Einheiten ein und desselben Polycarbosilans auch unterschiedliche Bedeutung besitzen kann,

$R^{2a}$ für Alkyl, Cycloalkyl, Aryl oder Arylalkyl steht, wobei $R^{2a}$ in verschiedenen Einheiten ein und desselben Polycarbosilans auch unterschiedliche Bedeutung besitzen kann,

$R^4$ für Wasserstoff, Fluor oder Phenyl steht, wobei $R^4$ in verschiedenen Einheiten ein und desselben Polycarbosilans auch unterschiedliche Bedeutung besitzen kann,

n für den Fall, daß $R^4$ für Phenyl steht, die Zahl 1 bedeutet, und für den Fall, daß $R^4$ für Wasserstoff oder Fluor steht, eine ganze Zahl von 1 bis 6 bedeutet, wobei n in verschiedenen Einheiten ein und desselben Polycarbosilans auch unterschiedliche Bedeutung besitzen kann, und

p für eine ganze Zahl von n bis 2n-1 steht, wobei p in verschiedenen Einheiten ein und desselben Polycarbosilans auch unterschiedliche Bedeutung besitzen kann,

Dihalogensilane der Formel IV mit einer Dibromid-Verbindung der Formel V

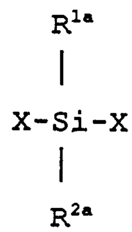 (IV),

$Br\text{-}(C_nF_pR^4{}_{2n-p})\text{-}Br$ (V)

worin

X für die Halogene Chlor, Brom oder Jod, steht

in äquimolaren Mengen, in einer Grignard-Polykondensationsreaktion mit 2 Mol Magnesiummetall bezogen auf die eingesetzte Menge der jeweiligen Dihalogenverbindungen umsetzt.

**14.** Verfahren zur Herstellung von Polycarbosilanen des Anspruches 1 auf Basis von Struktureinheiten der Formel Ib

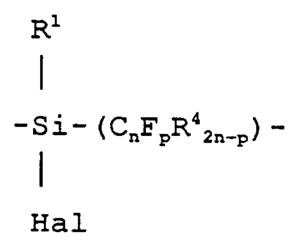 (Ib)

worin

$R^1$ für Wasserstoff, Alkyl, Cycloalkyl, Aryl, Arylalkyl oder Halogen steht, wobei $R^1$ in verschiedenen Einheiten ein und desselben Polycarbosilans auch unterschiedliche Bedeutung besitzen kann,

Hal für Halogen, vorzugsweise für Chlor, Brom oder Fluor, steht, wobei Hal in verschiedenen Einheiten ein und desselben Polycarbosilans auch unterschiedliche Bedeutung besitzen kann,

dadurch gekennzeichnet, daß man Polycarbosilane auf Basis von Struktureinheiten der Formel Ic

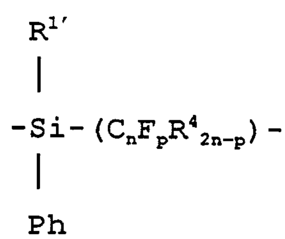 (Ic)

worin

$R^{1'}$ die Bedeutung von $R^1$ besitzt unter Schutzgasatmosphäre in inertem Lösungsmittel unter weitgehendem Wasserausschluß mit wenigstens einem Halogenierungsreagenz unter polaren oder ionischen Reaktionsbedingungen, gegebenenfalls in Gegenwart einer Lewis-Säure, für mehrere Stunden umsetzt, sodaß die in den Struktureinheiten der allgemeinen Formel Ic enthaltenen Phenylsubstituenten Ph und gegebenenfalls enthaltenen Reste $R^{1'}$ = Ph teilweise oder vollständig durch Halogenatome ausgetauscht werden, und

gegebenenfalls danach das in das Polycarbosilan eingeführte Halogen unter polaren oder ionischen Reaktionsbedingungen ganz oder teilweise gegen ein anderes Halogenatom austauscht.

## Claims

1. Polycarbosilanes based on structural units of the general formula I

$$\begin{array}{c} R^1 \\ | \\ -Si-(C_nF_pR^4{}_{2n-p})- \\ | \\ R^2 \end{array} \qquad (I)$$

wherein

- $R^1$ represents hydrogen, alkyl, cycloalkyl, aryl, arylalkyl or halogen, it being possible for $R^1$ also to have different meanings in various units of one and the same polycarbosilane,
- $R^2$ represents alkyl, cycloalkyl, aryl, arylalkyl or halogen, it being possible for $R^2$ also to have different meanings in various units of one and the same polycarbosilane,
- $R^4$ represents hydrogen, fluorine or phenyl, it being possible for $R^4$ also to have different meanings in various units of one and the same polycarbosilane,
- n denotes the number 1 for the case when $R^4$ represents phenyl, and denotes a whole number from 1 to 6 for the case when $R^4$ represents hydrogen or fluorine, it being possible for n also to have different meanings in various units of one and the same polycarbosilane, and
- p represents a whole number from n to 2n-1, it being possible for p also to have different meanings in various units of one and the same polycarbosilane.

2. Polycarbosilanes according to Claim 1, characterised in that the radical $R^4$ and the indices n and p have only one single meaning in each case in the structural units of the general formula I.

3. Polycarbosilanes according to one of Claims 1 to 2, characterised in that each of the substituents $R^1$ and $R^2$ have only one single meaning in each case in the structural units of the general formula I.

4. Polycarbosilanes according to Claim 1, characterised in that the radical $R^4$ represents hydrogen or fluorine in the structural units of the general formula I.

5. Polycarbosilanes according to Claim 1, characterised in that the radical $R^4$ represents fluorine in the structural units of the general formula I.

6. Polycarbosilanes according to Claim 1, characterised in that n denotes a whole number from 1 to 3.

7. Polycarbosilanes according to Claim 1, characterised in that the radical $R^1$ represents hydrogen, methyl, ethyl, propyl, butyl, vinyl, phenyl or halogen and the radical $R^2$ represents methyl, ethyl, propyl, butyl, vinyl, phenyl or halogen in the structural units of formula I.

8. Polycarbosilanes according to Claim 1, characterised in that the radicals $R^1$ and $R^2$ represent halogen in the structural units of the general formula I.

9. Polycarbosilanes according to Claim 1, characterised in that the radicals $R^1$ and $R^2$ represent chlorine, bromine or fluorine in the structural units of the general formula I.

10. Polycarbosilanes according to Claim 9, characterised in that radicals $R^1$ and $R_2$ both represent fluorine in the structural units of the general formula I.

11. Polycarbosilanes according to one of the preceding Claims, characterised in that they are cross-linked by branching groups of the general formulae II and/or III

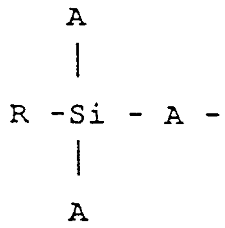 (II), 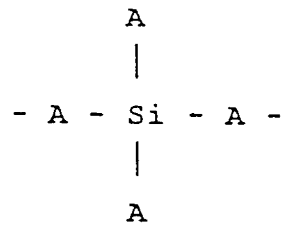 (III)

wherein

A represents a radical $C_nF_pR^4{}_{2n-p}$, in which $R^4$ and the indices n and p have the above meaning, and

R represents hydrogen or alkyl, cycloalkyl, aryl or arylalkyl.

**12.** Polycarbosilanes according to one of the preceding Claims, characterised in that they have halogen, alkyl, cycloalkyl, arylalkyl, aryl, alkoxyl or hydroxyl groups as end groups.

**13.** Process for preparing polycarbosilanes of Claim 1, characterised in that for the preparation of polycarbosilanes based on structural units of the general formula Ia

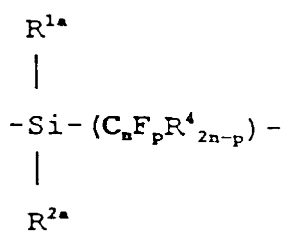 (Ia)

wherein

$R^{1a}$ represents hydrogen, alkyl, cycloalkyl, aryl or arylalkyl, it being possible for $R^{1a}$ also to have different meanings in various units of one and the same polycarbosilane,

$R^{2a}$ represents alkyl, cycloalkyl, aryl or arylalkyl, it being possible for $R^{2a}$ also to have different meanings in various units of one and the same polycarbosilane,

$R^4$ represents hydrogen, fluorine or phenyl, it being possible for $R^4$ also to have different meanings in various units of one and the same polycarbosilane,

n denotes the number 1 for the case when $R_4$ represents phenyl, and denotes a whole number from 1 to 6 for the case when $R^4$ represents hydrogen or fluorine, it being possible for n also to have different meanings in various units of one and the same polycarbosilane, and

p represents a whole number from n to 2n-1, it being possible for p also to have different meanings in various units of one and the same polycarbosilane,

dihalosilanes of the formula IV are reacted with a dibromide compound of the formula V

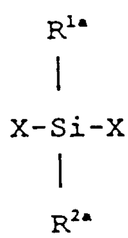 (IV),

$Br-(C_nF_pR^4{}_{2n-p})-Br$ (V)

wherein

X represents the halogens chlorine, bromine or iodine,

in equimolar quantities, in a Grignard polycondensation reaction with 2 moles of magnesium metal, relative to the quantity of the respective dihalogen compounds used.

**14.** Process for preparing polycarbosilanes of Claim 1, based on structural units of the formula Ib,

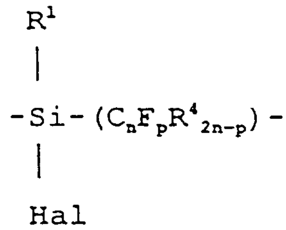

(Ib)

wherein

$R^1$ represents hydrogen, alkyl, cycloalkyl, aryl, arylalkyl or halogen, it being possible for $R^1$ also to have different meanings in various units of one and the same polycarbosilane,

Hal represents halogen, preferably chlorine, bromine or fluorine, it being possible for Hal also to have different meanings in various units of one and the same polycarbosilane,

characterised in that polycarbosilanes based on structural units of the formula Ic

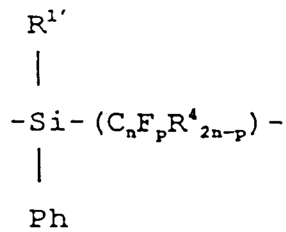

(Ic)

wherein

$R^{1'}$ has the meaning of $R^1$

are reacted, under a protective gas atmosphere in an inert solvent with water largely excluded, with at least one halogenating reagent under polar or ionic reaction conditions, optionally in the presence of a Lewis acid, for several hours in such a way that the phenyl substituents Ph contained in the structural units of the general formula Ic and any radicals $R^{1'}$ = Ph contained are partially or completely exchanged for halogen atoms, and

optionally thereafter the halogen introduced into the polycarbosilane under polar or ionic reaction conditions is completely or partially exchanged for a further halogen atom.

## Revendications

**1.** Polycarbosilanes à base d'unités de motifs de la formule générale I

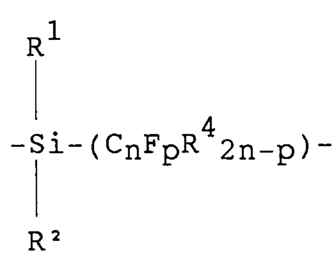

(I)

dans laquelle

$R^1$ désigne un hydrogène, un alkyle, un cycloalkyle, un aryle, un arylalkyle ou un halogène, $R^1$ pouvant également avoir une signification différente dans différents motifs d'un seul et même polycarbosilane,

$R^2$ désigne un alkyle, un cycloalkyle, un aryle, un arylalkyle ou un halogène, $R^2$ pouvant également avoir une signification différente dans différents motifs d'un seul et même polycarbosilane,

$R^4$ désigne un hydrogène, un fluor ou un phényle, $R^4$ pouvant également avoir une signification différente dans différents motifs d'un seul et même polycarbosilane,

n désigne le nombre 1 si $R^4$ représente le phényle et un nombre entier de 1 à 6 si $R^4$ représente l'hydrogène ou le fluor, n pouvant avoir également avoir une signification différente dans différents motifs d'un seul et même polycarbosilane, et

p désigne un nombre entier de n à 2n-1, p pouvant également avoir une signification différente dans différents motifs d'un seul et même polycarbosilane.

**2.** Polycarbosilanes selon la revendication 1, caractérisés en ce que, dans les motifs de la formule générale I, le reste $R^4$ et les indices n et p n'ont respectivement qu'une seule signification.

**3.** Polycarbosilanes selon l'une des revendications 1 à 2, caractérisés en ce que, dans les motifs de la formule générale I, chacun des substituants $R^1$ et $R^2$ n'a respectivement qu'une seule signification.

**4.** Polycarbosilanes selon la revendication 1, caractérisés en ce que, dans les motifs de la formule générale I, le reste $R^4$ représente l'hydrogène ou le fluor.

**5.** Polycarbosilanes selon la revendication 1, caractérisés en ce que, dans les motifs de la formule générale I, le reste $R^4$ représente le fluor.

**6.** Polycarbosilanes selon la revendication 1 caractérisés en ce que n signifie un nombre entier de 1 à 3.

**7.** Polycarbosilanes selon la revendication 1, caractérisés en ce que, dans les motifs de la formule I, le reste $R^1$ représente l'hydrogène, le méthyle, l'éthyle, le propyle, le butyle, le vinyle, le phényle ou un halogène et le reste $R^2$ représente le méthyle, l'éthyle, le propyle, le butyle, le vinyle, le phényle ou un halogène.

**8.** Polycarbosilanes selon la revendication 1, caractérisés en ce que, dans les motifs de la formule générale I, le reste $R^1$ et $R^2$ représente un halogène.

**9.** Polycarbosilanes selon la revendication 1, caractérisés en ce que, dans les motifs de la formule générale I, le reste $R^1$ et $R^2$ représente le chlore, le brome ou le fluor.

**10.** Polycarbosilanes selon la revendication 9, caractérisés en ce que, dans les motifs de la formule générale I, les restes $R^1$ et $R^2$ représentent tous les deux le fluor.

**11.** Polycarbosilanes selon l'une des revendications précédentes, caractérisés en ce qu'ils sont réticulés par des groupes de ramification des formules générales II et/ou III

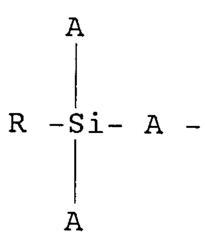
(II),
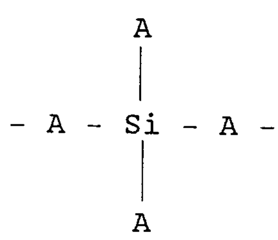
(III)

dans lesquelles

A désigne un reste $C_nF_pR^4{}_{2n-p}$, $R^4$ et les indices n et p ayant la signification indiquée plus haut

et

R désigne un hydrogène ou un alkyle, un cycloalkyle, un aryle ou un arylalkyle.

**12.** Polycarbosilanes selon l'une des revendications précédentes, caractérisés en ce que, en tant que groupes terminaux, ils présentent des groupes halogène, alkyle, cycloalkyle, arylalkyle, aryle, alcoxyle ou hydroxyle.

**13.** Procédé de fabrication de carbosilanes selon la revendication 1, caractérisé en ce que, pour la fabrication de polycarbosilanes à base de motifs de formule générale Ia

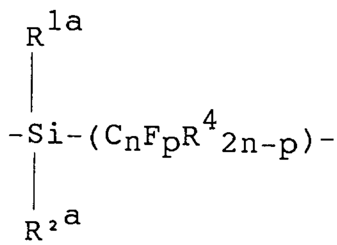

(Ia)

où

$R^{1a}$ représente un hydrogène, un alkyle, un cycloalkyle, un aryle ou un arylalkyle, $R^{1a}$ pouvant avoir également une signification différente dans différents motifs d'un seul et même polycarbosilane,

$R^{2a}$ représente un alkyle, un cycloalkyle, un aryle ou un arylalkyle, $R^{2a}$ pouvant avoir également une signification différente dans différent motifs d'un seul et même polycarbosilane,

$R^4$ représente un hydrogène, un fluor ou un phényle, $R^4$ pouvant avoir également une signification différente dans différents motifs d'un seul et même polycarbosilane,

n représente le chiffre 1 si $R^4$ représente le phényle et un chiffre entier de 1 à 6 si $R^4$ représente l'hydrogène ou le fluor, n pouvant avoir également avoir une signification différente dans différents motifs d'un seul et même polycarbosilane, et

p représente un chiffre entier de n à 2n-1, p pouvant également avoir une signification différente dans différents motifs d'un seul et même polycarbosilane,

on fait réagir des dihalogénosilanes de formule IV

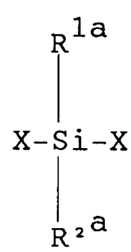

(IV),

$Br-(C_nF_pR^4{}_{2n-p})-Br$ (V)

où

X représente les halogènes chlore, brome ou iode, avec un composé dibromure de formule V en quantités équimoléculaires, dans une réaction de polycondensation de Grignard avec 2 moles de magnésium métal par rapport à la quantité utilisée des composés de dihalogène respectifs.

**14.** Procédé de fabrication de polycarbosilanes de la revendication 1 sur la base de motifs de la formule Ib

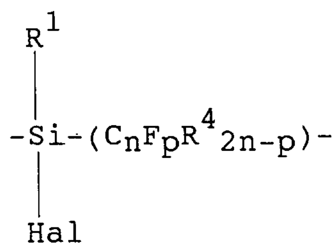

(Ib)

où

$R^1$ représente l'hydrogène, un alkyle, un cycloalkyle, un aryle, un arylalkyle ou un halogène, $R^1$ pouvant également avoir une signification différente dans différents motifs d'un seul et même polycarbosilane. Hal représente un halogène, de préférence le chlore, le brome ou le fluor, Hal pouvant également avoir une signification différente dans différents motifs d'un seul et même polycarbosilane.

caractérisé en ce qu'on fait réagir pendant plusieurs heures des polycarbosilanes à base de motifs de formule Ic

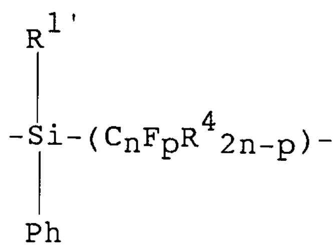

(Ic)

où

$R^{1'}$ a la signification de $R^1$, sous atmosphère de gaz protecteur dans un solvant inerte en excluant largement l'eau avec au moins un réactif d'halogénation dans des conditions de réaction polaires ou ioniques, éventuellement en présence d'une acide de Lewis, de sorte que les substituants phényle Ph contenus dans les motifs de formule générale Ic et éventuellement les restes $R^{1'}$ = Ph puissent être remplacés partiellement ou complètement par des atomes d'halogène, et qu'ensuite, le cas échéant, l'halogène introduit dans le polycarbosilane puisse être remplacé tout ou partiellement par un autre atome d'halogène dans des conditions de réaction polaires ou ioniques.